(19) Europäisches Patentamt
European Patent Office
Office européen des brevets

(11) **EP 1 459 261 B1**

(12) **EUROPEAN PATENT SPECIFICATION**

(45) Date of publication and mention
of the grant of the patent:
**06.04.2011 Bulletin 2011/14**

(51) Int Cl.:
***G06T 19/00*** (2011.01)

(21) Application number: **02794320.8**

(22) Date of filing: **19.12.2002**

(86) International application number:
**PCT/US2002/040733**

(87) International publication number:
**WO 2003/054803 (03.07.2003 Gazette 2003/27)**

(54) **AUTOMATIC NAVIGATION FOR VIRTUAL ENDOSCOPY**

AUTOMATISCHE NAVIGATION FÜR VIRTUELLE ENDOSKOPIE

NAVIGATION AUTOMATIQUE POUR ENDOSCOPIE VIRTUELLE

(84) Designated Contracting States:
**DE NL**

(30) Priority: **20.12.2001 US 343012 P**
**18.12.2002 US 322326**

(43) Date of publication of application:
**22.09.2004 Bulletin 2004/39**

(73) Proprietor: **Siemens Medical Solutions USA, Inc.**
**Malvern, PA 19355-1406 (US)**

(72) Inventor: **GEIGER, Bernhard**
**Cranbury, NJ 08512 (US)**

(74) Representative: **Wilding, Frances Ward**
**Haseltine Lake LLP**
**Lincoln House, 5th Floor**
**300 High Holborn**
**London WC1V 7JH (GB)**

(56) References cited:
**EP-A- 0 908 849    WO-A-99/42977**

• PHEE S J ET AL: "AUTOMATION OF COLONOSCOPY PART II: VISUAL-CONTROL ASPECTS INTERPRETING IMAGES WITH A COMPUTER TO AUTOMATICALLY MANEUVER THE COLONOSCOPE" IEEE ENGINEERING IN MEDICINE AND BIOLOGY MAGAZINE, IEEE INC. NEW YORK, US, vol. 17, no. 3, 1 May 1998 (1998-05-01), pages 81-88, XP000751409 ISSN: 0739-5175

**Description**

**BACKGROUND OF THE INVENTION**

1. Field of the Invention

The present invention relates generally to computer vision and imaging systems, and more particularly, to a system and method for automatic navigation of a viewpoint in virtual endoscopy.

2. Description of the Related Art

Virtual endoscopy (VE) refers to a method of diagnosis based on computer simulation of standard, minimally invasive endoscopic procedures using patient specific three-dimensional (3D) anatomic data sets. Examples of current endoscopic procedures include bronchoscopy, sinusoscopy, upper GI endoscopy, colonoscopy, cystoscopy, cardioscopy and urethroscopy. VE visualization of non-invasively obtained patient specific anatomic structures avoids the risks (e.g., perforation, infection, hemorrhage, etc.) associated with real endoscopy and provides the endoscopist with important information prior to performing an actual endoscopic examination. Such understanding can minimize procedural difficulties, decrease patient morbidity, enhance training and foster a better understanding of therapeutic results.

In virtual endoscopy, 3D images are created from two-dimensional (2D) computerized tomography (CT) or magnetic resonance (MR) data, for example, by volume rendering. These 3D images are created to simulate images coming from an actual endoscope, e.g., a fiber optic endoscope. This means that a viewpoint of the virtual endoscope has to be chosen inside a lumen of the organ or other human structure, and the rendering of the organ wall has to be done using perspective rendering with a wide angle of view, typically 100 degrees. This viewpoint has to move along the inside of the lumen, which means that a 3D translation and a 3D rotation have to be applied. Controlling these parameters interactively is a challenge.

A commonly used technique for navigating a viewpoint of a virtual endoscope is to calculate a "flight" path beforehand and automatically move the viewpoint of the virtual endoscope along this path. However, this technique requires a. segmentation and trajectory calculation step that is time consuming and can fail.

WO 99/42977 discloses an automatic path planning system in which a viewing path is automatically determined between a starting point and an ending point through a structure formed by a plurality of two-dimensional images. This viewing path is responsive to a penalty associated with passing through various points in the cavity.

According to one aspect of the present invention, a method for navigating a viewpoint of a virtual endoscope in a lumen of a structure is provided. The method includes the steps of (a) determining an initial viewpoint of the virtual endoscope, the initial viewpoint having a first center point and first direction; (b)determining a longest ray from the initial viewpoint to the lumen wall, the longest ray having a first longest ray direction; (c) determining a second direction between the first direction of the initial viewpoint and the first longest ray direction; (d)turning the viewpoint to the second direction and moving the initial viewpoint a first predetermined distance in a first direction of the initial viewpoint; (e) calculating a second center point of the viewpoint; and (f)moving the viewpoint to the second center point. The method may further include the step of repeating steps (b) through (f) until the viewpoint reaches an intended target.

The method may further include the step of rendering a three-dimensional (3D) image of the structure, and the rendering step may include scanning the structure to acquire a plurality of two-dimensional (2D) images and rendering the 3D image from the plurality of 2D images.

The second direction of the viewpoint may be determined as a weighted sum of the first direction of the initial viewpoint and the first longest ray direction.

The step of calculating a second center point may include the steps of casting a plurality of rays in a plane perpendicular to second direction of the viewpoint; determining an intersection point of each of the plurality of rays with the lumen wall; and determining an average of the intersection points as the second center point. Alternatively, the calculating a second center point comprises the steps of determining a plurality of planes intersecting the first center point, each plane having a different orientation; casting a plurality of rays in each of the plurality of planes; determining an intersection point of each of the plurality of rays with the lumen wall; and determining an average of the intersection points as the second center point.

According to another aspect of the present invention, a program storage device readable by a machine, tangibly embodying a program of instructions executable by the machine to perform method steps for navigating a viewpoint of a virtual endoscope in a lumen of a structure includes the method steps of (a)determining an initial viewpoint of the virtual endoscope, the initial viewpoint having a first center point and first direction; (b)determining a longest ray from the initial viewpoint to the lumen wall, the longest ray having a first longest ray direction; (c) determining a second direction between the first direction of the initial viewpoint and the first longest ray direction; (d)turning the viewpoint to the second direction and moving the initial viewpoint a first predetermined distance in a first direction of the initial

viewpoint; (e) calculating a second center point of the viewpoint; (f)moving the viewpoint to the second center point; and repeating steps (b) through (f) until the viewpoint reaches an intended target. In still a further aspect of the present invention, there is provided a system for virtual endoscopy comprising an image renderer for rendering a three-dimensional (3D) image of a structure from a plurality of two-dimensional (2D) images; a processor for navigating a viewpoint of a virtual endoscope in the 3D image of the structure; and a display device for displaying the viewpoint. The processor is arranged to carry cut the step of determining an initial viewpoint of the virtual endoscope, the initial viewpoint having a first center point, determining a longest ray from the initial viewpoint to the lumen wall, the longest ray having a first longest ray direction, determining second direction between the first direction of the initial viewpoint and the first longest ray direction, turning the viewpoint to the second direction and moving the initial viewpoint a first predetermined distance in a first direction of the initial viewpoint, calculating a second center point of the viewpoint, and moving the viewpoint to the second center point.

The system may further comprise a scanner device for scanning a the plurality of two-dimensional (2D) images of the structure and a cursor control device for determining a speed of movement of the viewpoint.

The apparatus and method of the present invention determines automatically a direction and orientation of a virtual endoscope. Therefore, a user needs to control only one parameter - forward or backward speed. The present invention allows immediate interactive navigation inside an organ without preprocessing, e.g., segmentation and path generation.

The above and other aspects, features, and advantages of the present invention will become more apparent in light of the following detailed description when taken in conjunction with the accompanying drawings in which:

FIG. 1 is a block diagram of an exemplary system for automatic navigation in virtual endoscopy in accordance with the present invention;

FIG. 2 is a flowchart illustrating a method for automatic navigation in virtual endoscopy in accordance with the present invention;

FIGS. 3 (a) through 3(e) are several views of a virtual endoscope entering an organ or lumen of a structure for illustrating a method of automatic navigation in virtual endoscopy according to an embodiment of the present invention; and

FIG. 4 is a diagram illustrating a centering technique of the method of FIG. 2 in according with the present invention.

## DETAILED DESCRIPTION OF PREFERRED EMBODIMENTS

Preferred embodiments of the present invention will be described hereinbelow with reference to the accompanying drawings. In the following description, well-known functions or constructions are not described in detail to avoid obscuring the invention in unnecessary detail.

A system and method for automatic navigation of a viewpoint in virtual endoscopy is provided. The present invention employs a raycasting technique to a rendered perspective image of a structure or internal organ of a human, e.g., a colon. In raycasting, for every pixel of the image displayed, a ray is cast and its intersection with an organ wall is calculated. In the method of the present invention, the longest ray is stored and its intersection point with the organ wall is calculated for an orientation of the virtual endoscope. The position of the virtual endoscope is chosen to look into the direction of the longest ray. In this way, the virtual endoscope always looks into the direction of the farthest point in the viewpoint. The endoscope is then pushed along this direction by an amount corresponding to a selected user speed.

However, this would mean that the virtual endoscope viewpoint would always move close to organ walls in the case of bends or folds. Therefore, additional rays are chosen orthogonally around the viewpoint to re-center the viewpoint. All intersection points of these lateral rays with the organ walls are added and the result is project onto the orthogonal plane of the virtual endoscope resulting in a new position of the virtual endoscope.

Additionally, to avoid a shaking motion, the newly calculated orientation is blended with a previous orientation using a weighting factor that depends on the speed (delta displacement) of the viewpoint of the virtual endoscope. If the speed is high, the new orientation has a higher weight; if the speed is low, the previous orientation has a higher weight.

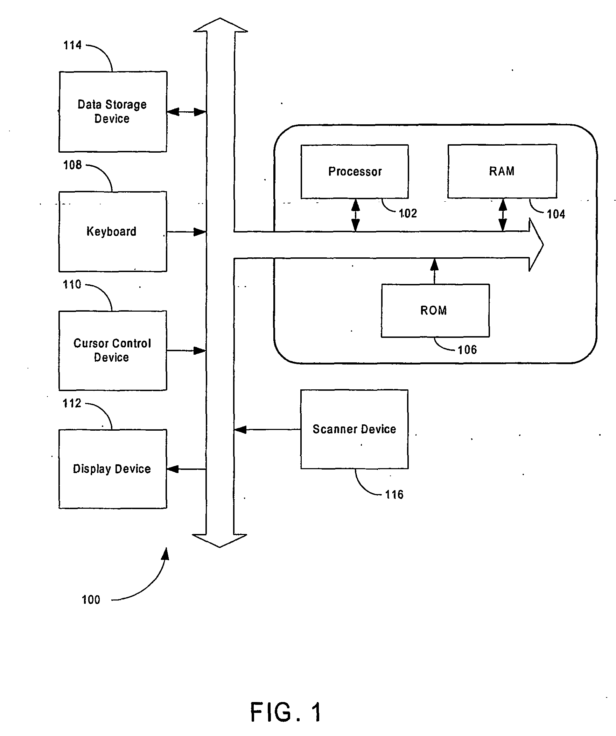

It is to be understood that the present invention may be implemented in various forms of hardware, software, firmware, special purpose processors, or a combination thereof. In one embodiment, the present invention may be implemented in software as an application program tangibly embodied on a program storage device. The application program may be uploaded to, and executed by, a machine comprising any suitable architecture such as that shown in FIG. 1. Preferably, the machine 100 is implemented on a computer platform having hardware such as one or more central processing units (CPU) 102, a random access memory (RAM) 104, a read only memory (ROM) 106 and input/output (I/O) interface(s) such as keyboard 108, cursor control device (e.g., a mouse or joystick) 110 and display device 112. The computer platform also includes an operating system and micro instruction code. The various processes and functions described herein may either be part of the micro instruction code or part of the application program (or a combination thereof) which is executed via the operating system. In addition, various other peripheral devices may be connected to the computer platform such as an additional data storage device 114 and a printing device. Furthermore, a scanner device 116, for example an X-ray machine or MRI (magnetic resonance imaging) machine, may be coupled to the machine 100 for collecting two-dimensional (2D) image data, which is processed and rendered as three-dimensional (3D) image data on the display device 112.

It is to be further understood that, because some of the constituent system components and method steps depicted in the accompanying figures may be implemented in software, the actual connections between the system components (or the process steps) may differ depending upon the manner in which the present invention is programmed. Given the teachings of the present invention provided herein, one of ordinary skill in the related art will be able to contemplate these and similar implementations or configurations of the present invention.

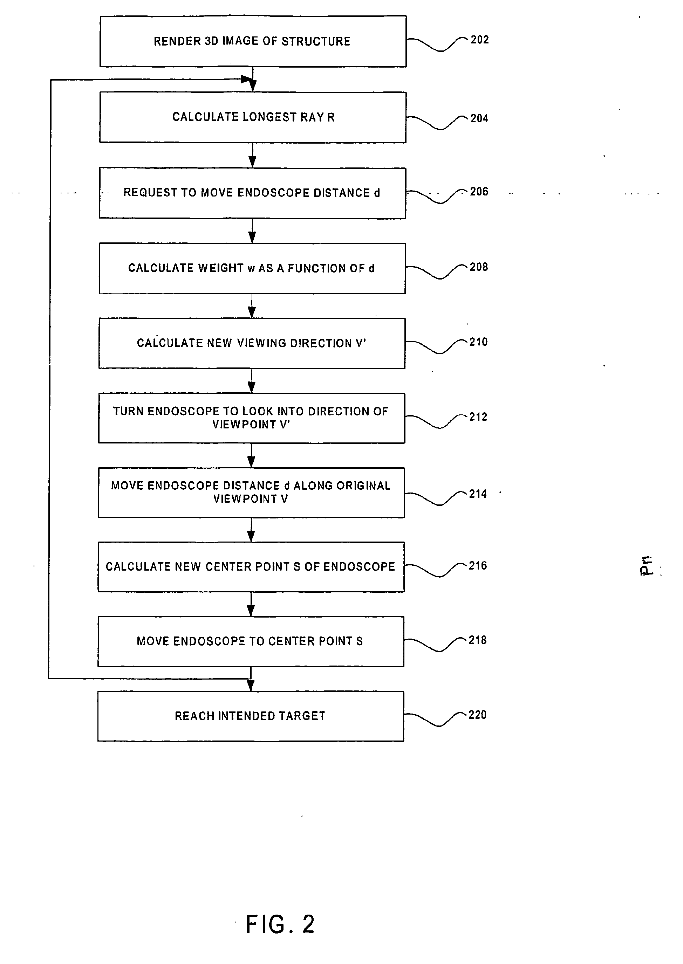

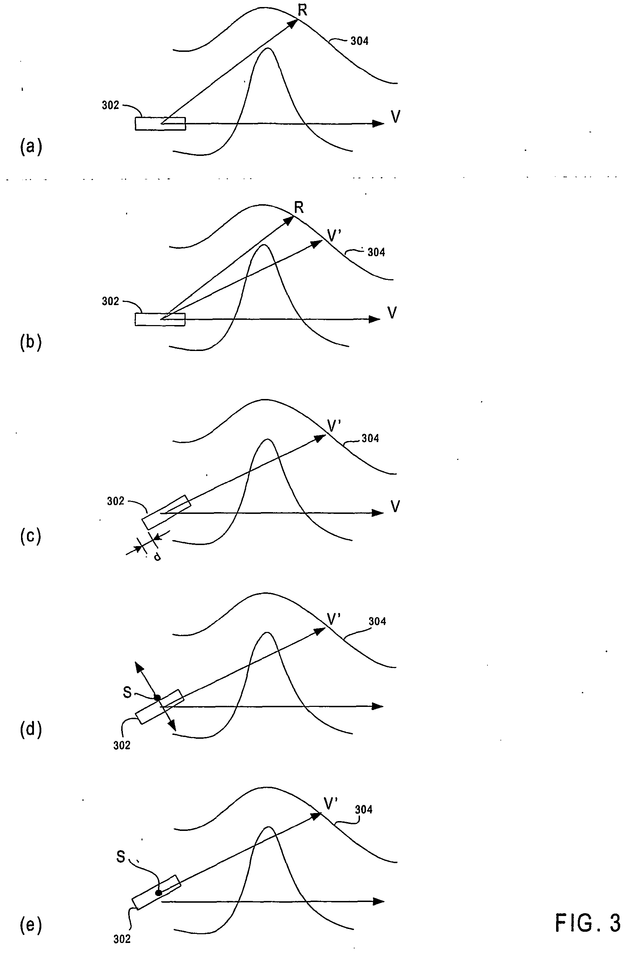

Referring to FIGS. 2 and 3, a method for automatic navigation of a viewpoint in a virtual endoscope according to an embodiment of the present invention will be described, where FIG. 2 is a flowchart illustrating the method and FIG. 3 shows several views of a virtual endoscope navigating an organ, e.g., a colon. It is to be understood that in operation a user will see the viewpoint of the virtual endoscope on the display device 112 as though an actual endoscopic procedure is being performed. The views illustrated in FIG. 3 are for the purposes of explaining an embodiment of navigating a viewpoint and will not be displayed.

Additionally, although the colon is used to describe the system and method of the present invention, it is to be understood that the system and method of the present invention can be applied to any human or animal body organ or structure which have hollow lumens such as blood vessels, airways, etc.

Before the navigation method is performed, the person to be tested is subject to a scanning procedure via scanning device 116, such as a helical computed tomography (CT) scanner or magnetic resonance imaging (MRI) scanner. After various scans are completed and a series of two-dimensional (2D) images are acquired, a 3D image of the organ to be viewed is rendered on the display device 112 by conventional rendering methods (step 202), such as raycasting, splatting, shear-warp, 3D texture-mapping hardware-based approaches, etc.

FIG. 3(a) shows a virtual endoscope 302 at an initial position entering a vitrual lumen 304 of a rendered image, looking in direction of viewpoint V. Longest ray direction R is obtained after rendering the image (step 204). If raycasting is used as the image rendering method, the longest ray R is automatically calculated. Otherwise, the longest ray could be calculated by casting rays after the image has been rendered by any known image rendering technique as desecribed above. After the longest ray R has been calculated, the user, e.g., surgeon or radiologist, is requested to move the viewpoint of the virtual endoscope by a distance d (step 206), for example, by moving the mouse or using a joystick.

Referring to FIG. 3(b), a new orientation viewpoint V' is to be calculated as a weighted sum of the initial direction V and the longest ray direction R (steps 208 and 210), as follows:

$$w= \mathtt{minimum(abs(d/f),\ 1.0)} \tag{1}$$

where f is a scaling factor, and

$$V' = wR + (1-w)V \tag{2}$$

The weight w is chosen so that at a slow speed (low displacement d) the initial direction V is dominant (low change in direction) and, at higher speed, the longest ray direction R is dominant (fast change in direction). The weighting step is performed to reduce oscillation and shaky motion, as will be described below. The scaling factor f is used to tune the speed of the virtual endoscope, where a high vlaue of f makes the virtual endoscope slower and a low value of f makes the virtual endoscope slower.

Referring to FIG. 3(c), the endoscope 118 is turned to look into the new viewing direction V' (step 212) and then moved by distance d along the initial viewing direction V (step 214). Then, a new center point S is calculated for the virtual endoscope 302, as shown in FIG. 3(d).

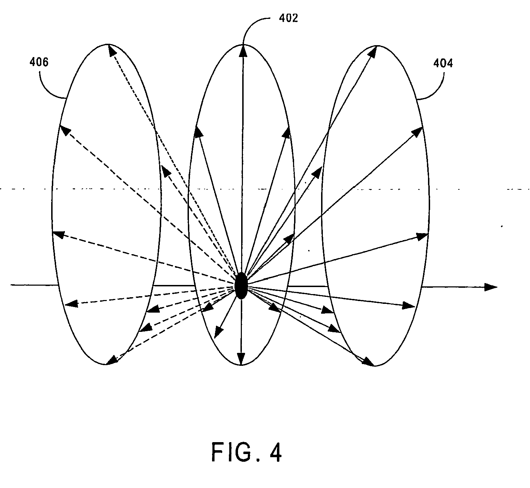

To center the endoscope (step 216), lateral rays are cast in a plane perpendicular to the viewpoint of the virtual endoscope 302, in all directions, for example, 8 lateral rays of varying lengths are cast every 40 degrees to form a circular pattern 402 as shown in FIG. 4. The intersection of the rays with the structure wall are calculated and projected into the perpendicular plane. The center point S is calculated as the average of these points.

Alternatively, the center point S can be calcluated using another circular pattern of 8 rays pointing forwards 404 and another circular pattern of 8 rays pointing backwards 406. More rays provide greater stability and accuracy. In a further embodiment, 5 circular patterns with 8 rays each are used: rays in the orthogonal plane, rays that are tilted 20 deg forwards, and 20 deg backwards, and rays tilted 45 deg forward and 45 deg backwards. All the vectors from the virtual endoscope position to the intersection points with a surface of the structure are added, and the resulting vector is projected into the orthogonal plane. This point is an approximation of the center and will be used as a new viewpoint position.

It is to be appreciated shaking happens when the virtual endoscope 302 moves laterally from one viewpoint to another (due to the centering step). If the virtual endoscope is pushed slowly, changes in the longest ray direction would create changes in the centering step, which results in the lateral motion. This is especially noticable when turning around a bend, e.g., a fold in a lumen. In this case, modifying the weight will reduce changes of the orientation and changes of the centering step and hence will reduce lateral motion.

The virtual endoscope 302 will now be shifted into the center position S, keeping its orientation toward viewpoint V' (step 218), as shown in FIG. 3 (e) . The method will be repeated until the virtual endoscope 302 reaches its intended target (step 220), e.g., a tumor, nodule, etc.

As opposed to prior art methods which "fly" through internal structures, the method of the present invention does not require the calculation of a flight path before starting the navigation resulting in significant time savings.

While the invention has been shown and described with reference to certain preferred embodiments thereof, it will be understood by those skilled in the art that various changes in form and detail may be made therein without departing from the scope of the invention as defined by the appended claims.

**Claims**

1. A method for navigating a viewpoint of a virtual endoscope (302) in a lumen (304) of a structure, the method comprising the steps of:

   (a) determining an initial viewpoint of the virtual endoscope (302), the initial viewpoint having a first center point and first direction (V);
   (b) determining (204) a longest ray from the initial viewpoint to the lumen wall (304), the longest ray having a first longest ray direction (R);
   (c) determining (210) a second direction (V') between the first direction (V) of the initial viewpoint and the first longest ray direction (R);
   (d) turning (212) the viewpoint to the second direction (V') and moving the initial viewpoint a first predetermined distance (d) in the first direction (V) of the initial viewpoint (214);
   (e) calculating (216) a second center point (S) of the viewpoint; and
   (f) moving (218) the viewpoint to the second center point (S).

2. The method as in claim 1, further comprising the step of repeating steps (b) through (f) until the viewpoint reaches an intended target.

3. The method as in claim 1, further comprising the step (202) of rendering a three-dimensional (3D) image of the structure.

4. The method as in claim 3, wherein the rendering step (202) further includes scanning the structure to acquire a plurality of two-dimensional (2D) images and rendering the 3D image from the plurality of 2D images.

5. The method as in claim 3, wherein the determining a longest ray step (204) and the rendering step (202) are performed by a raycasting image rendering technique.

6. The method as in claim 1, wherein the second direction (V') of the viewpoint is determined as a weighted sum of the first direction (V) of the initial viewpoint and the first longest ray direction (R).

7. The method as in claim 6, wherein the weighted sum is calculated as

$$V' = wR + (1-w)V$$

where V is the direction of the initial viewpoint, R is the first longest ray direction and w is a weight factor.

8. The method as in claim 7, wherein the weight factor w is calculated as

$$w = minimum (abs (d/f) , 1.0)$$

where d is the first predetermined distance and f is a scaling factor.

9. The method as in claim 1, wherein the calculating a second center point (216) comprises the steps of:

casting a plurality of rays in a plane perpendicular to second direction (V') of the viewpoint;
determining an intersection point of each of the plurality of rays with the lumen wall (304); and
determining an average of the intersection points as the second center point (S).

10. The method as in claim 1, wherein the calculating a second center point (216) comprises the steps of:

determining a plurality of planes intersecting the first center point, each plane having a different orientation;
casting a plurality of rays in each of the plurality of planes;
determining an intersection point of each of the plurality of rays with the lumen wall (304); and
determining an average of the intersection points as the second center point (S).

11. A program storage device readable by a machine, tangibly embodying a program of instructions executable by the machine to perform method steps for navigating a viewpoint of a virtual endoscope (302) in a lumen (304) of a structure, the method steps comprising:

(a) determining an initial viewpoint of the virtual endoscope (302), the initial viewpoint having a first center point and first direction (V);
(b) determining (204) a longest ray from the initial viewpoint to the lumen wall (304), the longest ray having a first longest ray direction (R);
(c) determining (210) a second direction (V') between the first direction (V) of the initial viewpoint and the first longest ray direction (R);
(d) turning (212) the viewpoint to the second direction (V') and moving the initial viewpoint a first predetermined distance (d) in the first direction (V) of the initial viewpoint (214);
(e) calculating (216) a second center point (S) of the viewpoint; and
(f) moving (218) the viewpoint to the second center point (S).

12. The program storage device as in claim 11, further comprising the step of repeating steps (b) through (f) until the viewpoint reaches an intended target.

13. The program storage device as in claim 11, further comprising the step (202) of rendering a three-dimensional (3D) image of the structure.

14. The program storage device as in claim 13, wherein the rendering step (202) further includes scanning the structure to acquire a plurality of two-dimensional (2D) images and rendering the 3D image from the plurality of 2D images.

15. The program storage device as in claim 13, wherein the determining a longest ray step (204) and the rendering step (202) are performed by a raycasting image rendering technique.

16. The program storage device as in claim 11, wherein the second direction (V') of the viewpoint is determined as a weighted sum of the first direction (V) of the initial viewpoint and the first longest ray direction (R).

17. The program storage device as in claim 16, wherein the weighted sum is calculated as

$$V' = wR + (1-w)V$$

where V is the direction of the initial viewpoint, R is the first longest ray direction and w is a weight factor.

18. The program storage device as in claim 17, wherein the weight factor w is calculated as

$$w = \text{minimum} \ (\text{abs} \ (d/f) \ , \ 1.0)$$

where d is the first predetermined distance and f is a scaling factor.

**19.** The program storage device as in claim 11, wherein the calculating a second center point (216) comprises the steps of:

determining a plurality of planes intersecting the first center point, each plane having a different orientation;
casting a plurality of rays in each of the plurality of planes;
determining an intersection point of each of the plurality of rays with the lumen wall (304); and
determining an average of the intersection points as the second center point (S).

**20.** A system for virtual endoscopy comprising:

an image renderer for rendering a three-dimensional (3D) image of a structure from a plurality of two-dimensional (2D) images;
a processor for navigating a viewpoint of a virtual endoscope (302) in the 3D image of the structure; and
a display device for displaying the viewpoint wherein the processor is arranged to carry out the steps of determining an initial viewpoint of the virtual endoscope (302), the initial viewpoint having a first center point and first direction (V), determining (204) a longest ray from the initial viewpoint to the lumen wall (304), the longest ray having a first longest ray direction (R), determining (210) a second direction (V') between the first direction (V) of the initial viewpoint and the first longest ray direction (R), turning (212) the viewpoint to the second direction (V') and moving the initial viewpoint a first predetermined distance (d) in the first direction (V) of the initial viewpoint (214), calculating (216) a second center point (S) of the viewpoint, and moving (218) the viewpoint to the second center point (S).

**21.** The system as in claim 20, further comprising a scanner device for scanning the plurality of two-dimensional (2D) images of the structure.

**22.** The system as in claim 20, further comprising a cursor control device for determining a speed of movement of the viewpoint.

**Patentansprüche**

**1.** Verfahren zum Navigieren eines Sichtpunkts eines virtuellen Endoskops (302) in einem Hohlraum (304) einer Struktur, wobei das Verfahren die Schritte umfasst:

a) das Ermitteln eines anfänglichen Sichtpunkts des virtuellen Endoskops (302), wobei der anfängliche Sichtpunkt einen ersten Mittelpunkt und eine erste Richtung (V) ausweist;
b) das Ermitteln (204) eines längsten Strahls vom anfänglichen Sichtpunkt zur Wand des Hohlraums (304), wobei der längste Strahl eine erste Richtung (R) des längsten Strahls aufweist;
c) das Ermitteln (210) einer zweiten Richtung (V') zwischen der ersten Richtung (V) des anfänglichen Sichtpunkts und der ersten Richtung (R) des längsten Strahls;
d) das Drehen (212) des Sichtpunkts in die zweite Richtung (V') und das Bewegen des anfänglichen Sichtpunkts um eine erste vorbestimmte Entfernung (d) in der ersten Richtung (V) des anfänglichen Sichtpunkts (214);
e) das Berechnen (216) eines zweiten Mittelpunkts (S) des Sichtpunkts; und
f) das Bewegen (218) des Sichtpunkts in den zweiten Mittelpunkt (S).

**2.** Verfahren nach Anspruch 1, zudem umfassend den Schritt des Wiederholens der Schritte b) bis f) bis der Sichtpunkt ein beabsichtigtes Ziel erreicht.

**3.** Verfahren nach Anspruch 1, zudem umfassend den Schritt (202) des Erstellens eines dreidimensionalen (3D) Bilds der Struktur.

**4.** Verfahren nach Anspruch 3, wobei der Erstellungsschritt (202) zudem das Abtasten der Struktur enthält, damit man eine Anzahl zweidimensionaler (2D) Bilder erhält, und das Erzeugen des 3D-Bilds aus den 2D-Bildern.

**5.** Verfahren nach Anspruch 3, wobei der Schritt (204) des Ermittelns eines längsten Strahls und der Erstellschritt (202) mit einer Strahlverfolgung-Bilderstellungstechnik vorgenommen werden.

**6.** Verfahren nach Anspruch 1, wobei die zweite Richtung (V') des Sichtpunkts als gewichtete Summe aus der ersten Richtung (V) des anfänglichen Sichtpunkts und der ersten Richtung (R) des längsten Strahls ermittelt wird.

**7.** Verfahren nach Anspruch 6, wobei die gewichtete Summe gemäß

$$V' = wR + (1 - w)V$$

berechnet wird, wobei V die Richtung des anfänglichen Sichtpunkts bezeichnet, R die erste Richtung des längsten Strahls und w einen Gewichtungsfaktor.

**8.** Verfahren nach Anspruch 7, wobei der Gewichtungsfaktor w gemäß

$$w = minimum \; (abs \; (d/f), \; 1,0)$$

berechnet wird, wobei d die erste vorbestimmte Entfernung ist und f ein Skalierungsfaktor.

**9.** Verfahren nach Anspruch 1, wobei das Berechnen eines zweiten Mittelpunkts (216) die Schritte umfasst:

    das Verfolgen einer Anzahl Strahlen in einer Ebene senkrecht zur zweiten Richtung (V') des Sichtpunkts;
    das Bestimmen eines Schnittpunkts eines jeden Strahls mit der Hohlraumwand (304); und
    das Bestimmen eines Mittelwerts der Schnittpunkte als zweiten Mittelpunkt (S).

**10.** Verfahren nach Anspruch 1, wobei das Berechnen eines zweiten Mittelpunkts (216) die Schritte umfasst:

    das Bestimmen einer Anzahl Ebenen, die den ersten Mittelpunkt schneiden, wobei jede Ebene eine andere Orientierung hat;
    das Verfolgen einer Anzahl Strahlen in jeder der Ebenen;
    das Bestimmen eines Schnittpunkts eines jeden Strahls mit der Hohlraumwand (304); und
    das Bestimmen eines Mittelwerts der Schnittpunkte als zweiten Mittelpunkt (S).

**11.** Von einer Maschine lesbare Programmspeichervorrichtung, die greifbar ein Programm aus Befehlen verkörpert, die von der Maschine ausgeführt werden können, um Verfahrensschritte zum Navigieren eines Sichtpunkts eines virtuellen Endoskops (302) in einem Hohlraum (304) einer Struktur auszuführen, wobei die Verfahrensschritte umfassen:

    a) das Ermitteln eines anfänglichen Sichtpunkts des virtuellen Endoskops (302), wobei der anfängliche Sichtpunkt einen ersten Mittelpunkt und eine erste Richtung (V) ausweist;
    b) das Ermitteln (204) eines längsten Strahls vom anfänglichen Sichtpunkt zur Wand des Hohlraums (304), wobei der längste Strahl eine erste Richtung (R) des längsten Strahls aufweist;
    c) das Ermitteln (210) einer zweiten Richtung (V') zwischen der ersten Richtung (V) des anfänglichen Sichtpunkts und der ersten Richtung (R) des längsten Strahls;
    d) das Drehen (212) des Sichtpunkts in die zweite Richtung (V') und das Bewegen des anfänglichen Sichtpunkts um eine erste vorbestimmte Entfernung (d) in der ersten Richtung (V) des anfänglichen Sichtpunkts (214);
    e) das Berechnen (216) eines zweiten Mittelpunkts (S) des Sichtpunkts; und
    f) das Bewegen (218) des Sichtpunkts in den zweiten Mittelpunkt (S).

**12.** Programmspeichervorrichtung nach Anspruch 11, zudem umfassend den Schritt des Wiederholens der Schritte b) bis f) bis der Sichtpunkt ein beabsichtigtes Ziel erreicht.

**13.** Programmspeichervorrichtung nach Anspruch 11, zudem umfassend den Schritt (202) des Erstellens eines dreidimensionalen (3D) Bilds der Struktur.

**14.** Programmspeichervorrichtung nach Anspruch 13, wobei der Erstellungsschritt (202) zudem das Abtasten der Struktur enthält, damit man eine Anzahl zweidimensionaler (2D) Bilder erhält, und das Erzeugen des 3D-Bilds aus den 2D-Bildern.

15. Programmspeichervorrichtung nach Anspruch 13, wobei der Schritt (204) des Ermittelns eines längsten Strahls und der Erstellschritt (202) mit einer Strahlverfolgung-Bilderstellungstechnik vorgenommen werden.

16. Programmspeichervorrichtung nach Anspruch 11, wobei die zweite Richtung (V') des Sichtpunkts als gewichtete Summe aus der ersten Richtung (V) des anfänglichen Sichtpunkts und der ersten Richtung (R) des längsten Strahls ermittelt wird.

17. Programmspeichervorrichtung nach Anspruch 16, wobei die gewichtete Summe gemäß

$$V' = wR + (1 - w)V$$

berechnet wird, wobei V die Richtung des anfänglichen Sichtpunkts bezeichnet, R die erste Richtung des längsten Strahls und w einen Gewichtungsfaktor.

18. Programmspeichervorrichtung nach Anspruch 17, wobei der Gewichtungsfaktor w gemäß

$$w = minimum \ (abs \ (d/f), \ 1,0)$$

berechnet wird, wobei d die erste vorbestimmte Entfernung ist und f ein Skalierungsfaktor.

19. Programmspeichervorrichtung nach Anspruch 11, wobei das Berechnen eines zweiten Mittelpunkts (216) die Schritte umfasst:

   das Ermitteln einer Anzahl Ebenen, die den ersten Mittelpunkt schneiden, wobei jede Ebene eine andere Orientierung hat;
   das Verfolgen einer Anzahl Strahlen in jeder der Ebenen;
   das Bestimmen eines Schnittpunkts eines jeden Strahls mit der Hohlraumwand (304); und
   das Bestimmen eines Mittelwerts der Schnittpunkte als zweiten Mittelpunkt (S).

20. System für die virtuelle Endoskopie, umfassend:

   einen Bildersteller, der ein dreidimensionales (3D) Bild einer Struktur aus einer Anzahl zweidimensionaler (2D) Bilder erstellt;
   einen Prozessor, der einen Sichtpunkt eines virtuellen Endoskops (302) in dem 3D-Bild der Struktur navigiert; und
   eine Anzeigevorrichtung, die den Sichtpunkt darstellt, wobei der Prozessor so ausgelegt ist, dass er die Schritte ausführt: Ermitteln eines anfänglichen Sichtpunkts des virtuellen Endoskops (302), wobei der anfängliche Sichtpunkt einen ersten Mittelpunkt und eine erste Richtung (V) ausweist; Ermitteln (204) eines längsten Strahls vom anfänglichen Sichtpunkt zur Wand des Hohlraums (304), wobei der längste Strahl eine erste Richtung (R) des längsten Strahls aufweist; Ermitteln (210) einer zweiten Richtung (V') zwischen der ersten Richtung (V) des anfänglichen Sichtpunkts und der ersten Richtung (R) des längsten Strahls; Drehen (212) des Sichtpunkts in die zweite Richtung (V') und Bewegen des anfänglichen Sichtpunkts um eine erste vorbestimmte Entfernung (d) in der ersten Richtung (V) des anfänglichen Sichtpunkts (214); Berechnen (216) eines zweiten Mittelpunkts (S) des Sichtpunkts; und Bewegen (218) des Sichtpunkts in den zweiten Mittelpunkt (S).

21. System nach Anspruch 20, zudem umfassend eine Abtastvorrichtung zum Abtasten der zweidimensionalen (2D) Bilder der Struktur.

22. System nach Anspruch 20, zudem umfassend eine Cursor-Steuervorrichtung zum Bestimmen einer Bewegungsgeschwindigkeit des Sichtpunkts.

**Revendications**

1. Procédé pour faire naviguer un point de vue d'un endoscope virtuel (302) dans une lumière (304) d'une structure, le procédé comprenant les étapes consistant à :

   (a) déterminer un point de vue initial de l'endoscope virtuel (302), le point de vue initial ayant un premier point de centrage et une première direction (V) ;
   (b) déterminer (204) un rayon le plus long allant du point de vue initial à la paroi de lumière (304), le rayon le plus long ayant une première direction de rayon le plus long (R) ;
   (c) déterminer (210) une seconde direction (V') entre la première direction (V) du point de vue initial et la première direction de rayon le plus long (R) ;
   (d) faire tourner (212) le point de vue vers la seconde direction (V') et déplacer le point de vue initial d'une première distance prédéterminée (d) dans la première direction (V) du point de vue initial (214) ;
   (e) calculer (216) un second point de centrage (S) du point de vue ; et
   (f) déplacer (218) le point de vue vers le second point de centrage (S).

2. Procédé selon la revendication 1, comprenant en outre l'étape consistant à répéter les étapes (b) à (f) jusqu'à ce que le point de vue atteigne une cible vissée.

3. Procédé selon la revendication 1, comprenant en outre l'étape (202) de rendu d'une image en trois dimensions (3D) de la structure.

4. Procédé selon la revendication 3, dans lequel l'étape de rendu (202) inclut en outre le balayage de la structure pour acquérir une pluralité d'images en deux dimensions (2D) et le rendu de l'image en 3D à partir de la pluralité d'images en 2D.

5. Procédé selon la revendication 3, dans lequel l'étape de détermination d'un rayon le plus long (204) et l'étape de rendu (202) sont réalisées par une technique de rendu d'image à lancer de rayon.

6. Procédé selon la revendication 1, dans lequel la seconde direction (V') du point de vue est déterminée comme une somme pondérée de la première direction (V) du point de vue initial et de la première direction de rayon le plus long (R).

7. Procédé selon la revendication 6, dans lequel la somme pondérée est calculée par

$$V' = wR + (1 - w)V$$

   où V est la direction du point de vue initial, R est la première direction de rayon le plus long et w est un facteur de pondération.

8. Procédé selon la revendication 7, dans lequel le facteur de pondération w est calculé par

$$W = minimum (abs (d/f), 1,0)$$

   où d est la première distance prédéterminée et f est un facteur de mise à l'échelle.

9. Procédé selon la revendication 1, dans lequel le calcul d'un second point de centrage (216) comprend les étapes consistant à :

   lancer une pluralité de rayons dans un plan perpendiculaire à une seconde direction (v') du point de vue ;
   déterminer un point d'intersection de chacun de la pluralité de rayons avec la paroi de lumière (304) ; et
   déterminer une moyenne des points d'intersection comme étant le second point de centrage (S).

**10.** Procédé selon la revendication 1, dans lequel le calcul d'un second point de centrage (216) comprend les étapes consistant à :

déterminer une pluralité de plans coupant le premier point de centrage, chaque plan ayant une orientation différente ;
lancer une pluralité de rayons dans chacun de la pluralité de plans ;
déterminer un point d'intersection de chacun de la pluralité de rayons avec la paroi de lumière (304) ; et
déterminer une moyenne des points d'intersection comme étant le second point de centrage (S).

**11.** Dispositif de mémorisation de programme lisible par une machine, intégrant de façon tangible un programme d'instructions exécutables par la machine pour réaliser des étapes de procédé permettant de faire naviguer un point de vue d'un endoscope virtuel (302) dans une lumière (304) d'une structure, le procédé comprenant les étapes consistant à :

(a) déterminer un point de vue initial de l'endoscope virtuel (302), le point de vue initial ayant un premier point de centrage et une première direction (V) ;
(b) déterminer (204) un rayon le plus long allant du point de vue initial à la paroi de lumière (304), le rayon le plus long ayant une première direction de rayon le plus long (R) ;
(c) déterminer (210) une seconde direction (V') entre la première direction (V) du point de vue initial et la première direction de rayon le plus long (R) ;
(d) faire tourner (212) le point de vue vers la seconde direction (V') et déplacer le point de vue initial d'une première distance prédéterminée (d) dans la première direction (V) du point de vue initial (214) ;
(e) calculer (216) un second point de centrage (S) du point de vue ; et
(f) déplacer (218) le point de vue vers le second point de centrage (S).

**12.** Dispositif de mémorisation de programme selon la revendication 11, comprenant en outre l'étape consistant à répéter les étapes (b) à (f) jusqu'à ce que le point de vue atteigne une cible visée.

**13.** Dispositif de mémorisation de programme selon la revendication 11, comprenant en outre l'étape (202) de rendu d'une image en trois dimensions (3D) de la structure.

**14.** Dispositif de mémorisation de programme selon la revendication 13, dans lequel l'étape de rendu (202) inclut en outre le balayage de la structure pour acquérir une pluralité d'images en deux dimensions (2D) et le rendu de l'image en 3D à partir de la pluralité d'images en 2D.

**15.** Dispositif de mémorisation de programme selon la revendication 13, dans lequel l'étape de détermination d'un rayon le plus long (204) et l'étape de rendu (202) sont réalisées par une technique de rendu d'image à lancer de rayon.

**16.** Dispositif de mémorisation de programme selon la revendication 11, dans lequel la seconde direction (V') du point de vue est déterminée comme une somme pondérée de la première direction (V) du point de vue initial et de la première direction de rayon le plus long (R).

**17.** Dispositif de mémorisation de programme selon la revendication 16, dans lequel la somme pondérée est calculée par

$$V' = wR + (1 - w)V$$

où V est la direction du point de vue initial, R est la première direction de rayon le plus long et w est un facteur de pondération.

**18.** Dispositif de mémorisation de programme selon la revendication 17, dans lequel le facteur de pondération w est calculé par

$$W = minimum (abs (d/f), 1,0)$$

où d est la première distance prédéterminée et f est un facteur de mise à l'échelle.

19. Dispositif de mémorisation de programme selon la revendication 11, dans lequel le calcul d'un second point de centrage (216) comprend les étapes consistant à :

déterminer une pluralité de plans coupant le premier point de centrage, chaque plan ayant une orientation différente ;
lancer une pluralité de rayons dans chacun de la pluralité de plans ;
déterminer un point d'intersection de chacun de la pluralité de rayons avec la paroi de lumière (304) ; et
déterminer une moyenne des points d'intersection comme étant le second point de centrage (S).

20. Système d'endoscopie virtuelle comprenant :

un moteur de rendu d'image permettant de réaliser le rendu d'une image en trois dimensions (3D) d'une structure à partir d'une pluralité d'images en deux dimensions (2D) ;
un processeur permettant de faire naviguer un point de vue d'un endoscope virtuel (302) dans l'image en 3D de la structure ; et
un dispositif d'affichage permettant d'afficher le point de vue, où le processeur est agencé pour réaliser les étapes consistant à déterminer un point de vue initial de l'endoscope virtuel (302), le point de vue initial ayant un premier point de centrage et une première direction (V), déterminer (204) un rayon le plus long allant du point de vue initial à la paroi de lumière (304), le rayon le plus long ayant une première direction de rayon le plus long (R), déterminer (210) une
seconde direction (V') entre la première direction (V) du point de vue initial et la première direction de rayon le plus long (R), faire tourner (212) le point de vue vers la seconde direction (V') et déplacer le point de vue initial d'une première distance prédéterminée (d) dans la première direction (V) du point de vue initial (214), calculer (216) un second point de centrage (S) du point de vue, et déplacer (218) le point de vue vers le second point de centrage (S).

21. Système selon la revendication 20, comprenant en outre un dispositif de balayage permettant de balayer la pluralité d'images en deux dimensions (2D) de la structure.

22. Système selon la revendication 20, comprenant en outre un dispositif de commande de curseur pour déterminer une vitesse de mouvement du point de vue.

FIG. 1

RENDER 3D IMAGE OF STRUCTURE — 202

CALCULATE LONGEST RAY R — 204

REQUEST TO MOVE ENDOSCOPE DISTANCE d — 206

CALCULATE WEIGHT w AS A FUNCTION OF d — 208

CALCULATE NEW VIEWING DIRECTION V' — 210

TURN ENDOSCOPE TO LOOK INTO DIRECTION OF VIEWPOINT V' — 212

MOVE ENDOSCOPE DISTANCE d ALONG ORIGINAL VIEWPOINT V — 214

CALCULATE NEW CENTER POINT S OF ENDOSCOPE — 216

MOVE ENDOSCOPE TO CENTER POINT S — 218

REACH INTENDED TARGET — 220

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9942977 A